Europäisches Patentamt

European Patent Office

Office européen des brevets

(11) Veröffentlichungsnummer : **0 014 845**
**B1**

(12) **EUROPÄISCHE PATENTSCHRIFT**

(45) Veröffentlichungstag der Patentschrift :
03.02.82

(51) Int. Cl.³ : **C 07 C125/06, B 01 J 27/10,**
**B 01 J 23/44, B 01 J 23/74**

(21) Anmeldenummer : 80100271.8

(22) Anmeldetag : 21.01.80

(54) **Verfahren zur Herstellung von Urethanen.**

(30) Priorität : 02.02.79 DE 2903950

(43) Veröffentlichungstag der Anmeldung :
03.09.80 (Patentblatt 80/18)

(45) Bekanntmachung des Hinweises auf die Patenterteilung : 03.02.82 Patentblatt 82/05

(84) Benannte Vertragsstaaten :
**BE DE FR GB IT NL**

(56) Entgegenhaltungen :
DE - A - 1 568 044
DE - A - 2 603 574
EP - A - 0 000 563
EP - A - 0 000 815
EP - A - 0 003 988
EP - A - 0 003 989
EP - A - 0 005 226
FR - A - 2 415 628
US - A - 3 531 512
US - A - 3 993 685
US - A - 4 134 880

(73) Patentinhaber : **BAYER AG**
**Zentralbereich Patente, Marken und Lizenzen**
**D-5090 Leverkusen 1, Bayerwerk (DE)**

(72) Erfinder : **Becker, Robert, Dr.**
**Fichtestrasse 2a**
**D-5090 Leverkusen (DE)**
Erfinder : **Grollg, Johann, Dr.**
**Heinrich-Luebke-Strasse 22**
**D-5090 Leverkusen (DE)**
Erfinder : **Rasp, Cristian, Dr.**
**Wolfskaul 10**
**D-5000 Koeln 80 (DE)**

Imprimerie Jouve, 18, rue St-Denis, 75001 Paris, France

Verfahren zur Herstellung von Urethanen

Die vorliegende Erfindung betrifft ein verbessertes Verfahren zur Herstellung von Urethanen (Carbamidsäureestern) durch Umsetzung organischer Nitroverbindungen mit Kohlenmonoxid und mindestens eine Hydroxygruppe enthaltenden organischen Verbindungen in Gegenwart von Palladium und/oder Palladiumverbindungen und eines Kokatalysators, der aus einem Gemisch eines oder mehrerer Eisenoxide und/oder Eisenoxidhydrate und aktivierenden chloridhaltigen Zusätzen besteht.

Organische Isocyanate werden großtechnisch im allgemeinen durch Umsetzung der entsprechenden Amine mit Phosgen hergestellt. Wegen der Giftigkeit des Phosgens ist man seit geraumer Zeit bestrebt, einen großtechnisch gangbaren Syntheseweg zu organischen Isocyanaten aufzufinden, bei welchem sich die Verwendung des Phosgens erübrigt. Ein derartiger Syntheseweg besteht in der Umsetzung von organischen Nitroverbindungen mit Kohlenmonoxid und organischen Hydroxylverbindungen zu den entsprechenden Urethanen und deren anschließende Spaltung in Isocyanat und Hydroxylgruppen aufweisende Verbindungen, wobei vor der Spaltung auch eine Modifizierung des als Zwischenprodukt erhaltenen Urethans denkbar ist. So ist es beispielsweise möglich, das aus Nitrobenzol, Kohlenmonoxid und Äthanol zugängliche Phenylurethan zunächst mit Formaldehyd zum Bisurethan des 4,4'-Diisocyanatodiphenylmethans umzusetzen, um das so erhaltene Zwischenprodukt unter Abspaltung des Äthanols in 4,4'-Diisocyanatodiphenylmethan zu überführen.

Die Spaltung von Urethanen in die entsprechenden Isocyanate und Hydroxylgruppen aufweisenden Verbindungen ist beispielsweise in der DE-OS 2 421 503 bzw. in den in dieser Literaturstelle abgehandelten Vorveröffentlichungen beschrieben.

Für die Herstellung der Urethane sind in der Patentliteratur im wesentlichen zwei Katalysatortypen beschrieben. So wird beispielsweise in den DE-Osen 2 343 826, 2 614 101 und 2 623 694 die Umsetzung von organischen Nitroverbindungen mit Kohlenmonoxid und Alkoholen zu Urethanen in Gegenwart von Selen oder Selenverbindungen beschrieben. Man erhält dabei sowohl mit Mono- als auch mit Dinitroverbindungen gute Urethan-Ausbeuten. Die Selenverbindungen, insbesondere die während der Reaktion intermediär entstehenden Organoselenverbindungen und Selenwasserstoff, sind außerordentlich giftig und müssen bei der Aufarbeitung quantitativ, z.B. durch chemische Reaktion entfernt werden, wodurch eine aufwendige chemische Aufarbeitungsstufe resultiert, welche die Wirtschaftlichkeit des Verfahrens in Frage stellt.

In den DE-OSen 1 568 044 und 2 603 574 werden als Katalysatoren Edelmetalle, insbesondere Palladium, in Gegenwart von Lewissäuren beschrieben. Als besonders wirksame Lewissäure wird wasserfreies Eisen(III)-chlorid angegeben. Man erhält mit diesen Katalysatoren zwar gute Urethan-Ausbeuten, bezogen auf die eingesetzte Nitroverbindung. In Bezug auf die eingesetzte Hydroxyverbindung sind die Ausbeuten jedoch unbefriedigend. So erhält man bei Verwendung von Äthanol als Hydroxykomponente hohe Anteile von Diäthyläther, dessen Bildung durch die sauren Eigenschaften der Lewissäure verursacht werden. Gleichzeitig beobachtet man bei Anwendung dieser Edelmetall/Lewissäure-Katalysatoren Korrosion der als Reaktionsbehälter eingesetzten Edelstahlautoklaven. Durch Zusatz organischer Basen, wie beispielsweise Pyridin (DE-OS 2 603 574) kann die Korrosion zwar weitgehend zurückgedrängt werden, die Ätherbildung ist jedoch in Gegenwart dieser Katalysatorsysteme noch untragbar hoch. Ein weiterer Nachteil dieser Katalysatorsysteme liegt in ihrer schlechten Rückführbarkeit, da die angewandten Lewissäuren in Gegenwart der eingesetzten Hydroxyverbindungen nicht ausreichend stabil sind.

Es wurde nun überraschend gefunden, daß die Umsetzung von organischen Nitroverbindungen mit Kohlenmonoxid und mindestens eine Hydroxygruppe enthaltenden organischen Verbindungen zu Urethanen in der flüssigen Phase bei erhöhter Temperatur und erhöhtem Druck in Gegenwart von Palladium und/oder Palladiumverbindungen und einem Kokatalysator besonders selektiv, sowohl in Bezug auf die eingesetzte organische Nitroverbindung, als auch in Bezug auf die organische Hydroxyverbindung durchgeführt werden kann, wenn man als Kokatalysatoren Gemische von Eisenoxiden und/oder Eisenoxidhydraten und aktivierenden chloridhaltigen Zusätzen verwendet.

Gegenstand der vorliegenden Erfindung ist somit ein Verfahren zur Herstellung von Urethanen durch Umsetzung organischer Nitroverbindungen mit Kohlenmonoxid und mindestens eine Hydroxylgruppe enthaltenden organischen Verbindungen in der flüssigen Phase bei erhöhter Temperatur und erhöhtem Druck in Gegenwart von Palladium und/oder Palladium-Verbindungen und einem Kokatalysator, dadurch gekennzeichnet, daß man als Kokatalysatoren sowohl.

(i) Eisenoxide und/oder Eisenoxidhydrate als auch

(ii) Hydrochloride tertiärer Amine und/oder anionisch, als Chloridgebundenes Chlor enthaltende Verbindungen von Elementen der dritten bis fünften Hauptgruppe oder ersten bis achten Nebengruppe des Periodensystems der Elemente mit Ausnahme von Eisenoxychlorid und Palladiumchlorid einsetzt.

Als oxidische Eisenkomponente (i) können z.B. Oxide und Oxidhydrate des zwei- und dreiwertigen Eisens in reiner Form oder als Gemisch eingesetzt werden, wie beispielsweise Eisen(II)-oxid, Eisen(II)-hydroxid, Eisen(III)-hydroxid, $\alpha$-$Fe_2O_3$, $\gamma$-$Fe_2O_3$, $Fe_3O_4$, $\alpha$-FeO-OH, $\beta$-FeO-OH, $\gamma$-FeO-OH. Besonders bevorzugt sind die Oxide und Oxidhydrate des dreiwertigen Eisens. Die oxidische Eisenkomponente wird in Konzentrationen von 0,1 bis 20 Gew.-%, vorzugsweise von 1-5 Gew.-%, bezogen auf das Reaktionsgemisch inklusive gegebenenfalls mitverwendeter Lösungsmittel, eingesetzt.

Als Kokatalysatorkomponente (ii) werden beim erfindungsgemäßen Verfahren Hydrochloride von tert. organischen Aminen und/oder anionisch als Chlorid gebundenes Chlor enthaltende Verbindungen von Elementen der dritten bis fünften Hauptgruppe oder der ersten bis achten Nebengruppe des Periodensystems der Elemente mit Ausnahme von Eisenoxychlorid und Palladiumchlorid eingesetzt.

Beispiele geeigneter Chloride sind $AlCl_3$, $SnCl_2 \cdot 2H_2O$, $SbCl_3$, $CuCl_2$, $ZnCl_2$, $CeCl_3$, $TiOCl_2$, $VCl_3$, $CrCl_3$, $MnCl_2$, $FeCl_2 \cdot nH_2O$ (n = 0,1,2,4,6), $\alpha$- und $\beta$-$Fe_2(OH)_3Cl$, $FeCl_2 \cdot n$ Pyridin (n = 2/3, 1,2,4), $FeCl_2 \cdot n$ Picolin (n = 1,4) u.ä. Komplexverbindungen.

Als Hydrochloride tertiärer Amine eignen sich insbesondere Hydrochloride von beliebigen unter den Reaktionsbedingungen inerten tertiären Aminen des Molgewichts 59-10.000, vorzugsweise 59-300. Es sind sowohl Hydrochloride aliphatischer als auch cycloaliphatischer, aromatischer, araliphatischer oder heterocyclischer tert. Amine geeignet. Ebenfalls geeignet sind Hydrochloride von tert. Aminen, welches unter den Reaktionsbedingungen inerte Substituenten, wie beispielsweise Halogen-, Alkenyl-, Cyano-, Aldehyd-, Alkoxy-, Phenoxy-, Thioalkoxy-, Thiophenoxy-, Carbamyl-, Carboalkoxy- und/oder Thiocarbamyl-Substituenten aufweisen. Beispiele geeigneter tertiärer Amine sind Trimethylamin, Triäthylamin, Tripropylamin, Tributylamin, cycloaliphatische tertiäre Amine, wie N,N-Dimethylcyclohexylamin, N,N-Diäthylcyclohexylamin, 1,4-Diazabicyclo(2,2,2)octan, aromatische tertiäre Amine wie N,N-Dimethylanilin, N,N-Diäthylanilin, sowie heteroaromatische tertiäre Amine wie Pyridin, Chinolin, Isochinolin, Chinaldin, Lepidin, pyrolysiertes Polyacrylnitril oder Polivinylpyridin.

Zu den bevorzugten Kokatalysator-Komponenten (ii) gehören Eisen(II)-chlorid-Verbindungen der oben beispielhaft genannten Art und die beispielhaft genannten tert. Ammoniumchloride insbesondere das Hydrochlorid des Pyridins.

Die Kokatalysator-Komponenten (ii) werden vorteilhafterweise in Konzentrationen von 0,05 bis 10 Gew.-%, insbesondere von 0,1 bis 5 Gew.-%, bezogen auf Reaktionsgemisch inklusive gegebenenfalls mitverwendetem Lösungsmittel, zu gesetzt. Man kann die reinen Verbindungen verwenden, jedoch auch Gemische der beispielhaft genannten Verbindungen einsetzen.

Die wesentliche Katalysatorenkomponente sind Palladiumsalze der nachstehend beispielhaft genannten Art, die vorzugsweise dem Reaktionsgemisch als solche zugegeben werden. Auch metallisches Palladium kann dem Reaktionsgemisch zugegeben werden, da durch das chloridaktivierte Eisenoxid eine Oxydation des metallischen Palladiums in Palladium(II)-Verbindungen stattfindet. Auch die Mitverwendung eines inerten Trägers, beispielsweise eines Aluminiumoxid-Trägers für das Palladium ist denkbar. Besonders vorteilhaft wird Palladium als im Reaktionsgemisch lösliche Verbindung zugegeben. Als Verbindungen sind beispielsweise Palladiumchlorid, Palladiumbromid, Palladiumjodid, Natriumtetrachloropalladat, Kaliumtetrachloropalladat, Natriumtetrabromopalladat, Natriumtetrajodopalladat, Kaliumtetrajodopalladat, Palladiumacetat, Palladiumacetylacetonat u.ä. lösliche Palladiumverbindungen geeignet. Ein besonders bevorzugtes Palladiumsalz ist Palladiumchlorid. Palladium oder die Palladiumverbindungen werden bevorzugt in Konzentrationen, bezogen auf das Reaktionsgemisch, inklusive gegebenenfalls mitverwendetem Lösungsmittel von 0,000 1 bis 0,1 Gew.-%, insbesondere von 0,000 2 bis 0,01 Gew.-%, berechnet als metallisches Palladium, zugegeben. Bei niedrigeren Palladium-Konzentrationen wird die Reaktionsgeschwindigkeit zu gering. Höhere Palladium-Konzentrationen sind zwar möglich, jedoch wegen der möglichen Edelmetallverluste unwirtschaftlich, zumal eine weitere Steigerung der Urethanausbeuten nicht mehr erfolgt. Es ist gerade einer der wesentlichen Vorteile des erfindungsgemäßen Verfahrens, daß es die Herstellung der Urethane in ausgezeichneten Ausbeuten bei gleichzeitiger Verwendung von nur äußerst geringen Mengen an Palladium-Verbindungen gestattet.

Gemäß einer besonderen Ausführungsform des erfindungsgemäßen Verfahrens werden als weitere Katalysatoren-Komponente Basen, vorzugsweise tertiäre Amine, mitverwendet. Diese Mitverwendung von tertiären Aminen erhöht die Selektivität bezüglich möglicher unerwünschter Nebenreaktionen der als Reaktionspartner eingesetzten organischen Hydroxy-Verbindungen.

Geeignete organische Basen sind insbesondere beliebige, unter den Reaktionsbedingungen inerte tert. Amine des Molekulargewichtsbereiches 59-10 000, vorzugsweise 59-300. Sowohl aliphatische als auch cycloaliphatische, aromatische, araliphatische oder heterocyclische tert. Amine sind geeignet. Ebenfalls geeignet sind derartige tert. Amine, welche unter den Reaktionsbedingungen inerte Substituenten, wie beispielsweise Halogen-, Alkenyl-, Cyano-, Aldehyd-, Alkoxy-, Phenoxy-, Thioalkoxy, Thiophenoxy-, Carbamyl-, Carboalkoxy- und/oder Thiocarbamyl-Substituenten aufweisen. Beispiele geeigneter tertiärer Amine sind Trimethylamin, Triäthylamin, Tripropylamin, Tributylamin, u.ä., cycloaliphatische tertiäre Amine, wie N,N-Dimethylcyclohexylamin, N,N-Diäthylcyclohexylamin, 1,4-Diazabicyclo(2,2,2)octan u.ä. ; aromatische tertiäre Amine wie N,N-Dimethylanilin, N,N-Diäthylanilin, sowie heteroaromatische tertiäre Amine, wie Pyridin, Chinolin, Isochinolin, Chinaldin, Lepidin, pyrolysiertes Polyacrylnitril oder Polyvinylpyridin.

Die tertiären Amine können in Konzentrationen von 0,01 bis 10 Gew.-%, insbesondere 0,1 bis 5 Gew.-%, bezogen auf das Reaktionsgemisch inklusive gegebenenfalls mitverwendetem Lösungsmittel, zugesetzt werden.

Ausgangsverbindungen für das erfindungsgemäße Verfahren sind beliebige organische Nitroverbindungen, d.h. beliebige Nitrogruppen aufweisende, ansonsten unter den Bedingungen des erfindungsgemäßen Verfahrens inerte organische Verbindungen mit mindestens einer aliphatisch, cycloaliphatisch und/oder aromatisch gebundenen Nitrogruppe, eines im allgemeinen zwischen 61 und 400, vorzugsweise 123 und 262 liegenden Molekulargewichts, sowie beliebige, mindestens eine Hydroxygruppe enthaltende organische Verbindungen, beispielsweise substituierte oder unsubstituierte, aliphatische, cycloaliphatische und/oder aromatische Mono- oder Polyhydroxyverbindungen, eines im allgemeinen zwischen 32 und 228, vorzugsweise 32 und 102 liegenden Molekulargewichts.

Beispielsweise können folgende aromatische Nitroverbindungen eingesetzt werden : Nitrobenzol, o-Dinitrobenzol, m-Dinitrobenzol, p-Dinitrobenzol, o-Chlornitrobenzol, m-Chlor-nitrobenzol, o-Chlor-nitrobenzol, o-Nitrotoluol, m-Nitrotoluol, p-Nitrotoluol, 2,3-Dinitrotoluol, 2,4-Dinitrotoluol, 2,5-Dinitrotoluol, 2,6-Dinitrotoluol, 3,4-Dinitrotoluol, 3-Nitro-o-xylol, 4-Nitro-o-xylol, 2-Nitro-m-xylol, 4-Nitro-m-xylol, 5-Nitro-m-xylol, Nitro-p-xylol, 3,4-Dinitro-o-xylol, 3,5-Dinitro-o-xylol, 3,6-Dinitro-o-xylol, 4,5-Dinitro-o-xylol, 2,4-Dinitro-m-xylol, 2,5-Dinitro-m-xylol, 4,5-Dinitro-m-xylol, 4,6-Dinitro-m-xylol, 2,3-Dinitro-p-xylol, 2,6-Dinitro-p-xylol, 1-Nitronaphthalin, 2-Nitronaphthalin, Dinitronaphthaline, Nitroanthracene, Nitrodiphenyle, Bis-(nitrophenyl)-methane, Bis-(nitrophenyl)-thioäther, Bis-(nitrophenyl)-sulfone, Nitrodiphenoxyalkane, Nitrophenothiazine.

Als cycloaliphatische Nitroverbindungen seien genannt : Nitrocyclobutan, Nitrocyclopentan, Nitrocyclohexan, 1,2-Dinitrocyclohexan, 1,3-Dinitrocyclohexan, 1,4-Dinitrocyclohexan, Bis-(nitrocyclohexyl)-methane.

Beispielhaft für die Gruppe der Nitroalkane seien genannt : Nitromethan, Nitroäthan, 1-Nitropropan, 2-Nitropropan, Nitrobutane, Nitropentane, Nitrohexane, Nitrodecane, Nitrocetane, 1,2-Dinitroäthan, 1,2-Dinitropropan, 1,3-Dinitropropan, Dinitrobutane, Dinitropentane, Dinitrohexane, Dinitrodecane, Phenylnitromethan, Bis-(nitromethyl)-cyclohexane, Bis-(nitromethyl)-benzole, ω-Nitrocarbonsäurenitrile.

Besonders bevorzugte Nitroverbindungen für das erfindungsgemäße Verfahren sind aromatische Nitroverbindungen wie insbesondere Nitrobenzol, 1,3-Dinitrobenzol, 2,4-Dinitrotoluol, 2,6-Dinitrotoluol, Dinitronaphthaline wie z.B. 1,5-Dinitronaphthalin oder 2,4'-bzw. 4,4'-Dinitrodiphenylmethan.

Zu den erfindungsgemäß geeigneten Hydroxygruppen enthaltenden organischen Verbindungen zählen einwertige Alkohole, mehrwertige Alkohole, einwertige Phenole und mehrwertige Phenole.

Die Alkohole umfassen lineare oder verzweigte Alkanole, Cycloalkanole, Alkenole, Cycloalkenole, Aralkylalkohole und ähnliches, jeder ein- oder mehrwertig. Diese Alkohole können einen Substituenten enthalten, der Sauerstoff, Stickstoff, Schwefel oder ein Halogenatom enthält, beispielsweise eine Halogen-, Sulfoxid-, Sulfon-, Amin-, Amid-, Carbonyl- oder Carbonsäureestergruppe. Beispielhaft seien folgende einwertigen Alkohole genannt : Methylalkohol, Äthylalkohol, Propanol, Isopropanol, Butanol, Pentanol, Hexanol, Cyclohexanol, Benzylalkohol. Geeignete mehrwertige Alkohole sind beispielsweise : Äthylenglykol, Diäthylenglykol, Propylenglykol, Dipropylenglykol, Glycerin, Hexantriol und ähnliche sowie höher funktionelle Polyole. Bevorzugt werden einwertige aliphatische Alkohole mit 1-6 Kohlenstoffatomen und besonders bevorzugt Äthylalkohol eingesetzt.

Zu den erfindungsgemäß geeigneten Phenolen zählen beispielsweise Phenol, Chlorphenole, Kresole, Äthylphenole, Propylphenole, Butylphenole oder höhere Alkylphenole, Brenzcatechin, Resorcin, 4,4'-Dihydroxydiphenylmethan, Bisphenol-A, Anthranol, Phenanthrol, Pyrogallol oder Phloroglucin.

Die organischen Hydroxy-Verbindungen werden bei der Durchführung des erfindungsgemäßen Verfahrens im allgemeinen in solchen Mengen eingesetzt, daß bei Verwendung von Mononitroverbindungen als Ausgangsmaterial ein Äquivalentverhältnis zwischen Nitrogruppen und Hydroxylgruppen von 1 : 0,5 bis 1 : 100, vorzugsweise 1 : 1 bis 1 : 100 und bei Verwendung von Dinitroverbindungen ein Äquivalentverhältnis zwischen Nitrogruppen und Hydroxylgruppen von 1 : 1 bis 1 : 100 vorliegt.

Besonders bevorzugt werden die bevorzugten Alkohole im Überschuß eingesetzt, wobei der nicht umgesetzte Überschuß als Reaktionsmedium dient.

Das Kohlenmonoxid wird im allgemeinen in einer Menge eingesetzt, die 1 bis 30 Mol Kohlenmonoxid pro Mol an umzusetzenden Nitrogruppen entspricht, wobei im allgemeinen das Kohlenmonoxid in den vorzugsweise beim erfindungsgemäßen Verfahren eingesetzten Druckreaktor eingepreßt wird.

Die erfindungsgemäße Umsetzung kann in Gegenwart oder in Abwesenheit eines Lösungsmittels durchgeführt werden. Im allgemeinen dient die vorzugsweise im Überschuß eingesetzte organische Hydroxylverbindung als Lösungsmittel. Die Mitverwendung inerter Lösungsmittel, die bis zu 80 Gew.-% des gesamten Reaktionsansatzes ausmachen können, ist jedoch auch möglich. Die Menge des Lösungsmittels muß, gleichgültig ob es sich um im Überschuß eingesetzte Hydroxylverbindung oder um inertes Lösungsmittel handelt, so bemessen sein, daß die Reaktionswärme der exothermen Urethanbildung ohne unzulässige Temperaturerhöhung abgeführt werden kann. Im allgemeinen wird daher das erfindungsgemäße Verfahren unter Verwendung einer Konzentration an Nitroverbindungen von 5-30 Gew.-%, vorzugsweise 5-20 Gew.-%, bezogen auf das Gesamtreaktionsgemisch inklusive dem Lösungsmittel durchgeführt.

Brauchbare Lösungsmittel sind gegen die Reaktionskomponenten und das Katalysatorsystem inerte Lösungsmittel, wie beispielsweise aromatische, cycloaliphatische und aliphatische Kohlenwasserstoffe, die gegebenenfalls durch Halogen substituiert sein können, wie Benzol, Toluol, Xylol, Chlorbenzol, Dichlorbenzol, Trichlorbenzol, Chlornaphthalin, Cyclohexan, Methylcyclohexan, Chlorcyclohexan, Methylenchlorid, Tetrachlorkohlenstoff, Tetrachloräthan, Trichlor-trifluoräthan u.ä Verbindungen.

Die Reaktionstemperatur liegt im allgemeinen zwischen 100 °C und etwa 300 °C, insbesondere zwischen 130 °C und 250 °C und besonders vorteilhaft im Bereich von 140 °C bis 220 °C. Der Druck muß so bemessen sein, daß stets das Vorliegen einer flüssigen Phase gewährleistet ist und liegt im allgemeinen im Bereich von 5 bis 500 bar, besonders vorteilhaft im Bereich von 30 bis 300 bar bei Reaktionstemperatur. Je nach eingesetzter Nitroverbindung bzw. Hydroxyverbindung beträgt die für quantitativem Umsatz benötigte Reaktionszeit zwischen wenigen Minuten und mehreren Stunden.

Die Umsetzung der Nitroverbindungen mit den Hydroxyverbindungen und Kohlenmonoxid zu Urethanen kann diskontinuierlich oder kontinuierlich durchgeführt werden.

Die diskontinuierliche Umsetzung kann im Hochdruckautoklaven mit geringen Mengen homogen gelöstem Palladiumsalz, einem ausreichenden Überschuß Eisenoxid und/oder Eisenoxidhydrat und einer ausreichenden Menge der beispielhaft genannten Kokatalysator-Komponenten (ii) durchgeführt werden. Die im Reaktionsmedium unlöslichen Eisenoxide, bzw. Eisenoxidhydrate werden vorzugsweise in Form eines feinen Pulvers zugegeben, die aktivierenden Zusatzstoffe (ii) vorzugsweise in Form einer homogenen alkoholischen Lösung. Die Verteilung der nicht gelösten überschüssigen Eisenoxid-Verbindungen kann beispielsweise durch kräftiges Rühren oder durch Umpumpen des Reaktionsgemisches erfolgen. Die exotherme Reaktionswärme kann z.B. durch intern eingebaute Kühlaggregate oder im Falle des Umpumpens auch über einen externen Wärmeaustauscher abgeführt werden. Die Aufarbeitung und Katalysatorrückführung kann je nach Löslichkeit des erzeugten Urethans im Reaktionsgemisch auf verschiedene Weise erfolgen. Bei leicht löslichen Urethanen kann beispielsweise nach beendeter Reaktion die Hauptmenge des bei tiefen Temperaturen schwerlöslichen Kokatalysatorgemisches samt dem größten Teil des adsorbierten Palladiums und des organischen Aminsalzes vom Reaktionsprodukt abgetrennt werden, beispielsweise durch Filtration oder Zentrifugieren, und in eine neue Umsetzung von Nitroverbindungen, Hydroxyverbindungen und Kohlenmonoxid wieder zurückgeführt werden. Das flüssige Reaktionsgemisch kann auf übliche Weise, z.B. durch fraktionierte Destillation, in Lösungsmittel, in die reinen Urethane und gegebenenfalls kleine Mengen von Nebenprodukten aufgetrennt werden, wobei diese Trennung diskontinuierlich oder kontinuierlich erfolgen kann. Im Destillationsrückstand sind oft kleine Mengen der in Reaktionsgemisch gelösten Kokatalysator-Komponente (ii) und/oder Spuren von Palladiumverbindungen enthalten, die wieder in die Umsetzung zurückgeführt werden können.

Im Falle von im Lösungsmittel bzw. überschüssiger Hydroxyverbindung schwer löslichen Urethanen kann die Aufarbeitung des Reaktionsgemisches in abgeänderter Weise erfolgen. Beispielsweise wird nach Entspannung unter Druck und höherer Temperatur, bei welchen die Urethane noch gelöst sind, jedoch das Katalysatorsystem Palladium/Kokatalysatorgemisch weitgehend ausfällt, die Hauptmenge Katalysator abfiltriert oder abzentrifugiert und dann durch Temperaturerniedrigung das schwerlösliche Urethan, gegebenenfalls zusammen mit geringen Mengen schwerlöslicher Nebenprodukte und restlichem Katalysator, auskristallisiert. Die Mutterlauge, die außer Lösungsmittel, bzw. der als Lösungsmittel angewandten überschüssigen organischen Hydroxyverbindung, noch geringe Mengen Nebenprodukte, gelöstes Urethan und gegebenenfalls gelöste Kokatalysator-Komponenten (ii) enthält, kann direkt oder nach vorheriger Entfernung leichtsiedender Nebenprodukte beispielsweise durch Destillation, in die Umsetzung der Nitroverbindungen mit den Hydroxyverbindungen und Kohlenmonoxid zurückgeführt werden, wobei die dem vorherigen Umsatz entsprechende Menge Nitroverbindung und Hydroxyverbindung ergänzt wird. Höhersiedende Nebenprodukte, welche nicht durch Kristallisation entfernt werden, können durch destillative Aufarbeitung eines aliquoten Teiles der Mutterlauge als Destillationrückstand kontinuierlich aus dem Rückführstrom entfernt werden. Das ausgefallene Rohurethan kann beispielsweise durch Kristallisation aus einem das Urethan bei höheren Temperaturen lösenden, die Nebenprodukte und die Katalysatorreste jedoch nicht lösenden Lösungsmittel wie beispielsweise Isooktan, Benzol, Toluol, Xylol, Chlorbenzol, Dichlorbenzol rekristallisiert werden. Die bei erhöhter Temperatur unlöslichen Rückstände können durch Oxidation in Eisenoxid und ein aus den organischen Verunreinigungen resultierendes Abgas, das im wesentlichen aus Kohlendioxid, Sauerstoff, Stickstoff und gegebenenfalls leicht flüchtigen organischen Verunreinigungen besteht, umgewandelt werden. Das Abgas kann je nach Zusammensetzung direkt in die Atmosphäre abgelassen werden oder zusätzlich einer katalytischen Nachverbrennung zugeführt werden, in welcher restliche Verunreinigungen oxidativ entfernt werden. Das aus dem Rückstand erhaltene Eisenoxid, das gegebenenfalls noch geringe Mengen Palladium und/oder Palladiumverbindung enthalten kann, wird wieder in die Umsetzung der Nitroverbindungen mit Hydroxyverbindungen und Kohlenmonoxid zurückgeführt.

Die kontinuierliche Umsetzung kann in einer Kesselkaskade, einem Rohrbündelreaktor, mehrerer hintereinander geschalteten Schlaufenreaktoren, in einem oder einer Serie hintereinander geschalteten adiabaten Reaktionsrohren durchgeführt werden. Die Wärmeabführung erfolgt beispielsweise entweder intern durch eingebaute Kühlaggregate, extern über einen Rohrbündelwärmetauscher oder adiabatisch über die Wärmekapazität des Reaktionsgemisches mit nachfolgender Abkühlung in externen Kühlaggregaten.

Die weitere Aufarbeitung kann wie oben beschrieben erfolgen, wobei sowohl eine kontinuierliche als auch eine diskontinuierliche Arbeitsweise angewandt werden kann.

Im Falle der bevorzugten Verwendung der erfindungsgemäßen Verfahrensprodukte als Zwischenprodukte zur Herstellung der entsprechenden Isocyanate ist ihre Reindarstellung oft überflüssig. Zur weiteren Verarbeitung kann es vielmehr ausreichend sein, die nach Abfiltrieren des Katalysators und gegebenenfalls Abdestillieren des Lösungsmittels anfallende Rohprodukte in die Weiterverarbeitung einzusetzen.

Das Verfahren wird durch die folgenden Beispiele illustriert, ohne damit die Erfindung auf die in den Beispielen gegebenen Bedingungen einzuschränken.

Beispiel 1

In einen 0,7 l Autoklaven aus rostfreiem Stahl wurden eine Lösung von 50 g Nitrobenzol in 200 g Äthanol zusammen mit 0,005 g Palladiumchlorid (19 ppm), 10,0 g $\alpha$-Fe$_2$O$_3$ (3,8 Gew.-%), 3,0 g FeCl$_2$·4 H$_2$O (1,1 Gew.-%) und 2,5 g Pyridin (0,9 Gew.-%) eingebracht und 120 bar Kohlenmonoxid bei Raumtemperatur aufgepreßt. Der Autoklaveninhalt wurde auf 180 °C aufgeheizt, wobei sich ein maximaler Druck von 145 bar einstellte, und 2 h bei dieser Temperatur belassen. Der Druck betrug nun 100 bar. Nun wurde auf Raumtemperatur abgekühlt, das Reaktionsgas über eine Kühlfalle entspannt und der flüssige Autoklaveninhalt zusammen mit der in der Kühlfalle abgeschiedenen Flüssigkeit gaschromatografisch analysiert. Der Nitrobenzol-Umsatz betrug 100 %. Die Selektivität an Phenylurethan (Äthyl-N-phenylcarbamidsäureester), bezogen auf Nitrobenzol, lag ebenfalls bei 100 %.

Beispiel 2

Es wurde wie im Beispiel 1 gearbeitet, jedoch als Katalysator 2,6 Gew.-% $\alpha$-Fe$_2$O$_3$ und 4,2 Gew.-% Pyridiniumchlorid eingesetzt; Pyridin selbst wurde nicht zugegeben. Auch hier betrug der Nitrobenzolumsatz 100 %; die Selektivität an Phenylurethan, bezogen auf Nitrobenzol, betrug 95 %.

Beispiel 3

Es wurde wie in Beispiel 1 gearbeitet, jedoch anstelle von Nitrobenzol 7,0 Gew.-%, bezogen auf Gesamtgemisch, an 2,4-Dinitrotoluol (DNT) zu 7,0 Gew.-% eingesetzt. Der DNT-Umsatz betrug 100 %; die Selektivität an Bisurethan war — bezogen auf DNT — 96 %; die effektive Reaktionszeit betrug lediglich 40 min.

Beispiel 4

Es wurde wie in Beispiel 1 gearbeitet, jedoch kein Eisenoxid, sondern lediglich 1,2 Gew.-% FeCl$_2$·4 H$_2$O eingesetzt.

Der Nitrobenzol-Umsatz betrug nur 25 % bei gleichgebliebener Selektivität).

Dieser Versuch beweist die Notwendigkeit der Eisenoxid-Zugabe.

Beispiel 5

Es wurde wie in Beispiel 1 gearbeitet, jedoch kein FeCl$_2$·4 H$_2$O, sondern lediglich 3,8 Gew.-% $\alpha$-Fe$_2$O$_3$ eingesetzt.

Der Nitrobenzolumsatz betrug nur 1 %.

Dieser Versuch beweist die Notwendigkeit, das $\alpha$-Fe$_2$O$_3$ mit einem Chlorid-Zusatz (beispielsweise in Form des FeCl$_2$ . 4 H$_2$O oder des Pyridiniumchlorids) zu aktivieren.

**Ansprüche**

1. Verfahren zur Herstellung von Urethanen durch Umsetzung organischer Nitroverbindungen mit Kohlenmonoxid und mindestens eine Hydroxygruppe enthaltenden organischen Verbindungen in der flüssigen Phase bei erhöhter Temperatur une erhöhtem Druck in Gegenwart von Palladium und/oder Palladium-Verbindungen und einem Kokatalysator, dadurch gekennzeichnet, daß man als Kokatalysator sowohl

(i) Eisenoxide und/oder Eisenoxidhydrate als auch

(ii) Hydrochloride tertiärer Amine und/oder anionisch, als Chloridgebundenes Chlor enthaltende Verbindungen von Elementen der dritten bis fünften Hauptgruppe oder ersten bis achten Nebengruppe des Periodensystems der Elemente mit Ausnahme von Eisenoxychlorid und Palladiumchlorid einsetzt.

2. Verfahren nach Anspruch 1, dadurch gekennzeichnet, daß man als Komponente (i) Oxide und/oder Oxidhydrate des dreiwertigen Eisens verwendet.

3. Verfahren nach Anspruch 1 und 2, dadurch gekennzeichnet, daß man als Komponente (ii) Eisen(II)-chlorid und/oder Eisen(II)-chlorid-Komplexe verwendet.

4. Verfahren nach Anspruch 1 bis 2, dadurch gekennzeichnet, daß man als Komponente (ii) Hydrochloride tertiärer Amine verwendet.

5. Verfahren nach Anspruch 1 bis 4, dadurch gekennzeichnet, daß man als zusätzliche Katalysator-Komponente tertiäre Amine mitverwendet.

6. Verfahren nach Anspruch 4, dadurch gekennzeichnet, daß als Hydrochlorid eines tertiären Amins Pyridinhydrochlorid eingesetzt wird.

7. Verfahren nach Anspruch 1 bis 6, dadurch gekennzeichnet, daß man als Nitroverbindung Nitrobenzol oder Dinitrotoluol verwendet.

8. Verfahren nach Anspruch 1 bis 7, dadurch gekennzeichnet, daß man als mindestens eine Hydroxygruppe enthaltende organische Verbindung einen einwertigen aliphatischen Alkohol mit 1 bis 6 Kohlenstoffatomen verwendet.

9. Verfahren nach Anspruch 1 bis 8, dadurch gekennzeichnet, daß man die Umsetzung im Temperaturbereich zwischen 130 °C und 250 °C durchführt.

10. Verfahren nach Anspruch 1 bis 9, dadurch gekennzeichnet, daß man die Umsetzung im Druckbereich zwischen 5 und 500 bar durchführt.


## Claims

1. A process for the production of urethanes by the reaction of organic nitro compounds with carbon monoxide and organic compounds containing at least one hydroxy group in the liquid phase at elevated temperature and elevated pressure in the presence of palladium and/or palladium compounds and a cocatalyst, characterised in that both

(i) iron oxides and/or iron hydroxides and

(ii) hydrochlorides of tertiary amines and/or compounds, containing chlorine which is anionically bound as chloride, of elements in the third to fifth main group or first to eighth subsidiary group of the periodic system of the elements with the exception of iron oxychloride and palladium chloride.

2. A process according to claim 1, characterised in that oxides and/or hydroxides of trivalent iron are used as component (i).

3. A process according to claims 1 and 2, characterised in that iron(II)-chloride and/or iron(II)-chloride complexes are used as component (ii).

4. A process according to claims 1 to 2, characterised in that hydrochlorides of tertiary amines are used as component (ii).

5. A process according to claims 1 to 4, characterised in that tertiary amines are used as additional catalyst component.

6. A process according to claim 4, characterised in that pyridine hydrochloride is used as hydrochloride of a tertiary amine.

7. A process according to claims 1 to 6, characterised in that nitrobenzene or dinitrotoluene is used as nitro compound.

8. A process according to claims 1 to 7, characterised in that a monohydric aliphatic alcohol with 1 to 6 carbon atoms is used as organic compound containing at least one hydroxy group.

9. A process according to claims 1 to 8, characterised in that the reaction is carried out at a temperature of from 130 °C to 250 °C.

10. A process according to claims 1 to 9, characterised in that the reaction is carried out at a pressure of from 5 to 500 bar.


## Revendications

1. Procédé de préparation d'uréthanes par réaction de composés nitrés organiques avec de l'oxyde de carbone et des composés organiques contenant au moins un groupe hydroxy, en phase liquide, à température élevée et sous forte pression, en présence de palladium et/ou de composés de palladium et d'un cocatalyseur, caractérisé en ce que, comme cocatalyseurs, on utilise aussi bien :

(i) des oxydes de fer et/ou des hydrates d'oxydes de fer, que

(ii) des chlorhydrates d'amines tertiaires et/ou des composés d'éléments du troisième au cinquième groupe principal ou du premier au huitième sous-groupe du Système Périodique des Eléments, ces composés contenant du chlore fixé par voie anionique sous forme d'un chlorure, à l'exception de l'oxychlorure de fer et du chlorure de palladium.

2. Procédé suivant la revendication 1, caractérisé en ce que, comme composants (i), on utilise des oxydes et/ou des hydrates d'oxydes de fer trivalent.

3. Procédé suivant les revendications 1 et 2, caractérisé en ce que, comme composants (ii), on utilise le chlorure de fer(II) et/ou des complexes de chlorure de fer(II).

4. Procédé suivant les revendications 1 et 2, caractérisé en ce que, comme composants (ii), on utilise des chlorhydrates d'amines tertiaires.

5. Procédé suivant les revendications 1 à 4, caractérisé en ce que, comme composants catalytiques supplémentaires, on utilise conjointement des amines tertiaires.

6. Procédé suivant la revendication 4, caractérisé en ce que, comme chlorhydrate d'une amine tertiaire, on utilise le chlorhydrate de pyridine.

7. Procédé suivant les revendications 1 à 6, caractérisé en ce que, comme composé nitré, on utilise le nitrobenzène ou le dinitrotoluène.

8. Procédé suivant les revendications 1 à 7, caractérisé en ce que, comme composé organique contenant au moins un groupe hydroxy, on utilise un alcool aliphatique monovalent contenant 1 à 6 atomes de carbone.

9. Procédé suivant les revendications 1 à 8, caractérisé en ce qu'on effectue la réaction à une température se situant dans l'intervalle compris entre 130 °C et 250 °C.

10. Procédé suivant les revendications 1 à 9, caractérisé en ce qu'on effectue la réaction sous une pression se situant dans l'intervalle compris entre 5 et 500 bars.